# EUROPEAN PATENT APPLICATION

(11) **EP 4 738 629 A1**
(43) Date of publication of application: **06.05.2026**
(21) Application number: 25212415.1
(22) Date of filing: 30.10.2025
(51) Int. Cl.: H02B 13/02, H01H 35/24

(54) **SUBSEA HYDRAULICALLY ACTUATED ELECTRICAL ISOLATOR**

(30) Priority: 30.10.2024 US 202463713977 P
(71) Applicant: OneSubsea IP UK Limited, London SW1E 6AJ (GB)
(72) Inventor: ASKELAND, Audun Magne, 5254 Sandsli (NO); GRYTDAL, Andreas, 5254 Sandsli (NO)
(74) Representative: Schlumberger Intellectual Property Department

(57) **Abstract**

A subsea electrical junction box (180) is provided. The subsea electrical junction box (180) includes a pressurized fluid source, a busbar (102a, b), a switch (100a, b) isolator module, and an electrical connector (124a, b, c). The switch (100a, b) is in selective fluid communication with the pressurized fluid source, the pressurized fluid source supplying hydraulic fluid to actuate the switch (100a, b) from a retracted configuration (130) to an extended configuration (140). The switch (100a, b) is in electrical communication with the busbar (102a, b). The electrical connector (124a, b, c) is in selective electrical communication with the busbar (102a, b) via the switch (100a, b).

## Description

### CROSS REFERENCE TO RELATED APPLICATIONS

This application claims priority to and the benefit of U.S. Provisional Patent Application Serial No. 63/713,977, titled "Subsea Hydraulically Actuated Electrical Isolator," filed October 30, 2024, the entire contents of which are incorporated herein by reference for all purposes.

### BACKGROUND

For subsea substations and high-power distribution systems, a straightforward and reliable method for disconnecting circuits is important to improve system availability. Specifically, in the case of subsea substations, this allows for the swift isolation of a failed subsea wet-mate connector and its associated cable from the operational circuits, minimizing production downtime.

### SUMMARY

Some embodiments provide a subsea electrical junction box. The subsea electrical junction box includes a pressurized fluid source, a busbar, a switch, and an electrical connector in selective electrical communication with the busbar via the switch. The switch is in selective fluid communication with the pressurized fluid source, the pressurized fluid source supplying hydraulic fluid to actuate the switch from a retracted configuration to an extended configuration, and the switch is electrically isolated from the pressurized fluid source.

In some embodiments, the busbar is hollow and houses at least a portion of a hydraulic line fluidly connecting the switch to the pressurized fluid source.

In some embodiments, the hydraulic line is electrically insulative.

In some embodiments, the busbar defines a transverse bore, and the hydraulic line extends through the transverse bore to connect to the switch.

In some embodiments, the pressurized fluid source is an accumulator package.

In some embodiments, the switch includes a housing mounted to and in electrical communication with the busbar, and a piston slidably disposed in and in electrical communication with the housing.

In some embodiments, the piston is slidably disposed in an actuation space defined by the housing, and when the pressurized fluid source supplies the hydraulic fluid to the switch, the hydraulic fluid flows into the actuation space and fluidically bears against a rear end of the piston to push the piston outwardly from the housing.

In some embodiments, the switch includes an electrical terminal mounted to and in electrical communication with the electrical connector, and a dielectric bracket mounted to the housing and the electrical terminal, the dielectric bracket electrically insulating the electrical terminal from the housing when the piston is in the retracted configuration.

In some embodiments, when the piston is in the extended configuration, the piston extends through the dielectric bracket.

In some embodiments, when the piston is in the extended configuration, the piston extends into, contacts, and is in electrical communication with the electrical terminal, and the electrical connector is in electrical communication with the busbar via the electrical terminal, the piston, and the housing.

In some embodiments, when the piston is in the extended configuration, a spring mounted in the electrical terminal releasably snaps into to a groove defined in a front end of the piston.

In some embodiments, when the piston is in the extended configuration, a spring mounted in the housing snaps into to a groove defined in a rear end of the piston.

In some embodiments, the piston sealably engages the housing via a piston seal disposed about the piston.

In some embodiments, the switch includes a bellow disposed in the housing to engage a rear end of the piston, the bellow being in fluid communication with the pressurized fluid source.

In some embodiments, the pressurized fluid source receives the hydraulic fluid to actuate the switch from the extended configuration to the retracted configuration.

Some embodiments provide a switch. The switch includes a dielectric bracket between a housing and an electrical terminal; and a piston disposed in the housing and moveable between a retracted configuration and an extended configuration.

In some embodiments, the dielectric bracket electrically isolates the housing from the electrical terminal when the piston is in the retracted configuration.

In some embodiments, the piston electrically connects the housing to the electrical terminal in the extended configuration.

Some embodiments provide a subsea electrical junction box including an isolator module, an electrical connector, an accumulator package, a high pressure valve, and a low pressure valve. The subsea electrical junction box, including the isolator module, is filled with hydraulic fluid at a first pressure. The isolator module includes a busbar, and a piston switch mounted to and in electrical communication with the busbar. The electrical connector is mounted to the isolator module and in selective electrical communication with the busbar via the piston switch. The accumulator package is in selective fluid communication with the piston switch. The accumulator package includes a high pressure bellow configured to store the hydraulic fluid at a second pressure greater than the first pressure, and a low pressure bellow configured to store the hydraulic fluid a third pressure less than the first pressure. The high pressure valve is configured to release hydraulic fluid at the second pressure from the high pressure bellow to the piston switch to actuate the piston switch from a retracted configuration to an extended configuration. The low pressure valve is configured to release hydraulic fluid at the third pressure from the piston switch to the low pressure bellow to actuate the piston switch from the extended configuration to the retracted configuration.

In some embodiments, the high pressure valve and the low pressure valve are in communication with and remotely controllable via an external controller.

### BRIEF DESCRIPTION OF THE DRAWINGS

The subject disclosure is further described in the following detailed description, and the accompanying drawings and schematics of non-limiting embodiments of the subject disclosure. The features depicted in the figures are not necessarily shown to scale. Certain features of the embodiments may be shown exaggerated in scale or in somewhat schematic form, and some details of elements may not be shown in the interest of clarity and conciseness. These and other features, aspects, and advantages of the present disclosure will become better understood when the following detailed description is read with reference to the accompanying drawings in which like characters represent like parts throughout the drawings. The Figures illustrate different aspects, embodiments and/or parts of the present disclosure, wherein:
FIG. 1 illustrates an offshore wind farm including a subsea electrical junction box, according to an embodiment;
FIG. 2 is a schematic view of the offshore wind farm of FIG. 1;
FIG. 3 is an isometric view of the subsea electrical junction box of FIG. 1;
FIG. 4 is an isometric view of an isolator module assembly of the subsea electrical junction box of FIG. 1;
FIG. 5 is a cut away isometric view of the isolator module assembly of FIG. 4;
FIG. 6 is an enlarged partial cross-sectional view of the isolator module assembly of FIG. 4;
FIG. 7 is a partial cross-sectional view of a hydraulically actuated electrical switch of the isolator module assembly of FIG. 4 in a retracted configuration;
FIG. 8 is a partial cross-sectional view of the hydraulically actuated electrical switch of FIG. 7 in an extended configuration;
FIG. 9 is a first hydraulic circuit diagram of an accumulator system of the subsea electrical junction box of FIG. 1;
FIG. 10 is a graph illustrating pressure versus time during movement of the hydraulically actuated electrical switch of FIG. 8;
FIG. 11 is a cross-sectional view of an alternative isolator module useable in the subsea electrical junction box of FIG. 1, according to an embodiment;
FIG. 12 is a cross-sectional view of an alternative hydraulically actuated electrical switch useable in the subsea electrical junction box of FIG. 1, according to an embodiment;
FIG. 13 is a hydraulic circuit diagram of an alternative accumulator system useable with the subsea electrical junction box of FIG. 1, according to an embodiment;
FIG. 14 is a hydraulic circuit diagram of a second alternative accumulator system useable with the subsea electrical junction box of FIG. 1, according to an embodiment;
FIG. 15 is a hydraulic circuit diagram of a third alternative accumulator system useable with the subsea electrical junction box of FIG. 1, according to an embodiment;
FIG. 16 is a hydraulic circuit diagram of a fourth alternative accumulator system useable with the subsea electrical junction box of FIG. 1, according to an embodiment;
FIG. 17 is a hydraulic circuit diagram of a fifth alternative accumulator system useable with the subsea electrical junction box of FIG. 1, according to an embodiment;
FIG. 18 is a schematic view of an accumulator configured to be pre-charged by a remotely operated vehicle, according to an embodiment;
FIG. 19 is a schematic view of an accumulator configured to be pressurized via a torque screw, according to an embodiment; and
FIG. 20 is a second hydraulic circuit diagram of an accumulator system of the subsea electrical junction box of FIG. 1.

### DETAILED DESCRIPTION

One or more specific embodiments of the present disclosure will be described below. The particulars shown herein are by way of example, and for purposes of illustrative discussion of the embodiments of the subject disclosure only and are presented in the cause of providing what is believed to be the most useful and readily understood description of the principles and conceptual aspects of the subject disclosure. In this regard, no attempt is made to show structural details of the subject disclosure in more detail than is necessary for the fundamental understanding of the subject disclosure, the description taken with the drawings making apparent to those skilled in the art how the several forms of the subject disclosure may be embodied in practice. Additionally, to provide a concise description of these exemplary embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time-consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are used in an open-ended fashion, and thus should be interpreted to mean "including, but not limited to." Also, any use of any form of the terms "connect," "engage," "couple," "attach," or any other term describing an interaction between elements is intended to mean either an indirect or a direct interaction between the elements described. In addition, as used herein, the terms "axial" and "axially" generally mean along or parallel to a central axis (e.g., central axis of a body or a port), while the terms "radial" and "radially" generally mean perpendicular to the central axis. For instance, an axial distance refers to a distance measured along or parallel to the central axis, and a radial distance means a distance measured perpendicular to the central axis. The use of "top," "bottom," "above," "below," and variations of these terms is made for convenience but does not require any particular orientation of the components.

Certain terms are used throughout the description and claims to refer to particular features or components. As one skilled in the art will appreciate, different persons may refer to the same feature or component by different names. This document does not intend to distinguish between components or features that differ in name, but not function.

The technical challenges associated with subsea substations and high-power distribution systems stem from the harsh underwater environment and the limitations of existing technologies. Subsea conditions, characterized by limited access, high pressure, corrosion, and biofouling, necessitate the use of specialized materials and designs that can endure these extremes. Wet-mate connectors, important for underwater electrical connections, are prone to harsh conditions, highlighting the need for reliability and robustness in subsea systems. Additionally, the ability to quickly isolate and disconnect faulty components without impacting the entire system is important but difficult to achieve with traditional topside methods, which are too complex for underwater applications. Currently, there is no qualified solution tailored for subsea applications.

Maintenance and repair of subsea systems are challenging due to limited access and the need for specialized intervention tools like remotely operated vehicles (ROVs) and autonomous underwater vehicles (AUVs). Modular design can facilitate easier repairs, but achieving reliable modularity underwater is complex. Efficiently managing high voltage and power distribution, along with effective thermal management, presents further difficulties. Advanced materials and innovative sealing and insulation technologies are required to ensure long-term reliability. Additionally, new subsea solutions must be compatible with existing infrastructure and have robust control and monitoring capabilities to operate with minimal human intervention. Addressing these challenges demands a multidisciplinary approach, focusing on developing solutions specifically tailored for the subsea environment rather than adapting topside technologies.

A hydraulically driven electrical isolator, also referred to as a switch system or electrical switch system, as illustrated in the figures is disclosed. The isolator utilizes a hydraulic tube/conduit with dielectric properties, and the driving fluid used can be the same as that in a chamber housing the isolators and/or switches. The actuation of switches can be performed by using pressure obtained from pressurized fluid sources controlled by valves for opening and closing (e.g., pre-charged spring-loaded accumulators, electrical solenoid valves, etc.).

The hydraulically driven electrical isolator features a hydraulic piston that functions as a switching device. Electrical current is typically conducted between the piston and cylinder walls using conductive contact bands. The electrical insulation is provided by the dielectric fluid in the chamber and dielectric support structures. The tubes conducting the driving fluid for the piston are electrically nonconductive, and, combined with the dielectric driving fluid, ensure electrical insulation between the hydraulic supply unit at ground potential and the hydraulic cylinder at high voltage potential. While the driving fluid is typically the same type as in the chamber housing the busbars and switches, it can, in principle, be a different fluid, as there is normally no connection between the two fluid chambers. Using the same fluid ensures that in case of leakage, the core function of the connection chamber remains unaffected.

The actuation of the isolator is achieved through pressure obtained from pre-charged or spring-loaded accumulators, using valves actuated by electrical solenoid and/or a remotely operating vehicle (ROV) for opening and closing. In some instances, the valves can be controlled from topside. Additionally or alternatively, the valves can be controlled by an external controller. The solenoid valves and valve controls are similar to those used in subsea hydraulic control systems. The actuation pressures are set to be both higher and lower than the subsea ambient pressure to achieve driving force in both directions for the piston. The solenoids are not needed if each three-phase switch has a separate hydraulic pressure generating device for operation.

By utilizing ambient pressure (subsea), only one tube is needed for each piston, as actuation can be performed by filling (closing the isolator) or emptying (opening the isolator) the hydraulic chamber driving the piston. Changing the pressure in the piston to below or above the ambient pressure will create a driving force to open or close the switch. Given that ambient subsea pressure is higher than topside atmospheric pressure, the required driving force is easily achieved.

The operation of the switching devices can be monitored by trending pressure in the hydraulic actuators. Different orifices for the three phases allow the pistons to operate at different speeds, resulting in distinct pressure/time characteristics that identify the actuation movement. When all pistons reach their end position, the pressure will equal the driving pressure. Other methods for monitoring include flow measurement logging, optical sensing, ultrasonic sensing, and pressure generation at the end position of the piston.

The configurations of the springs and accumulators can vary, using piston accumulators, bellow accumulators, and other configurations as shown in the drawings. Alternatives to using springs and accumulators for pressure generation include pumps, pressurized gas, cam-driven or crankshaft pistons/bellows, spindle-driven piston/bellow, gravity-driven piston/bellow with amplifiers, electromagnetically driven piston/bellow, pressure intensifiers using ambient pressure, supply from topside or ROV, thermal expansion of fluid with applied heat, explosives, and ROV-driven pistons/bellows.

The hydraulically driven isolator can be scaled in size, cross-section, contact area, and insulation to accommodate various current and voltage requirements. The hydraulic actuated switch can be placed at the connector side, busbar side of a branch, directly at the busbars, between any two electrical circuits that shall be isolated or connected, etc.

If the switch is positioned at the busbar side, the tubes are routed from the hydraulic cylinders using the busbars as routing channels. This method ensures that long creep distances for tubes are only needed from the end of the busbars, where all tubes for one phase have a common routing, making the solution compact.

An additional feature can be added to enable operation with voltage energized but without load current. This feature includes a spring-operated pilot piston that engages quickly to avoid long-duration sparks. This spring can be recharged using the "pencil" principle, with hydraulic force as the recharging energy. The small piston will not conduct high currents, and minor weld spots caused by arcing will not be problematic since the hydraulic piston with conductive contact band will later conduct the load currents.

The disclosure provides a hydraulically driven electrical isolator, where the hydraulic tube has dielectric properties, the driving fluid is the same as in the chamber housing the busbars, the actuation is performed with pressure obtained from pre-charged spring-loaded accumulators and using electrical solenoid valves for opening and closing.

In other words, the hydraulically driven electrical isolator according to the disclosure uses a hydraulic tube with dielectric properties, and the same fluid is used in the chamber housing the busbars. Actuation can be powered by pressure from pre-charged spring-loaded accumulators, with electrical solenoid valves responsible for opening and closing the isolator.

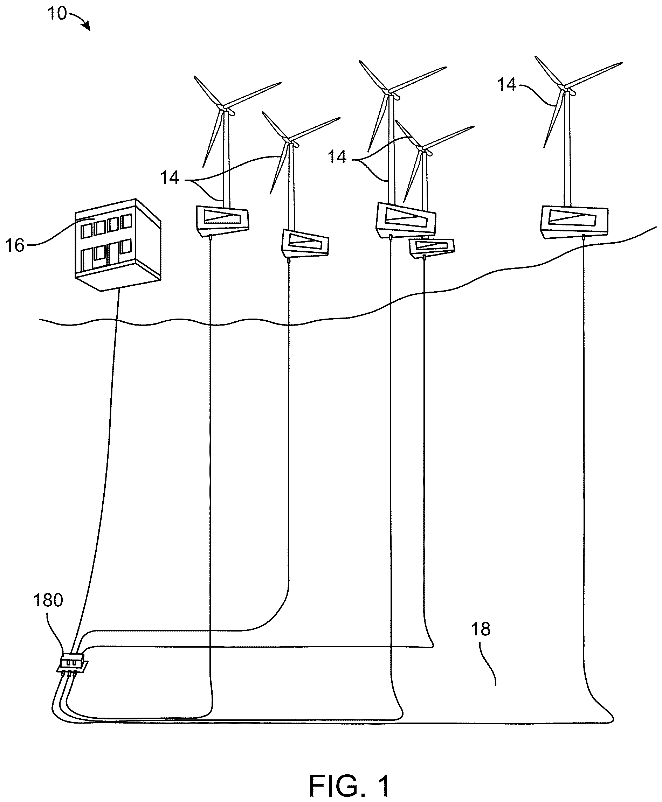

Referring generally to FIG. 1, a wind farm 10 includes subsea electrical junction box 180 in electrical communication with a plurality of offshore wind turbines 14 and a power grid 16. The subsea electrical junction box 180 is configured to rest on a seabed 18 underwater. When the offshore wind turbines 14 rotate, electrical energy is transmitted to the power grid 16 on land via the subsea electrical junction box 180. In some instances, the offshore wind turbines 14 provide three-phase alternating current to the power grid 16. The susbsea electrical junction box 180 is further configured to selectively connect and disconnect each of the offshore wind turbines 14 from the power grid 16.

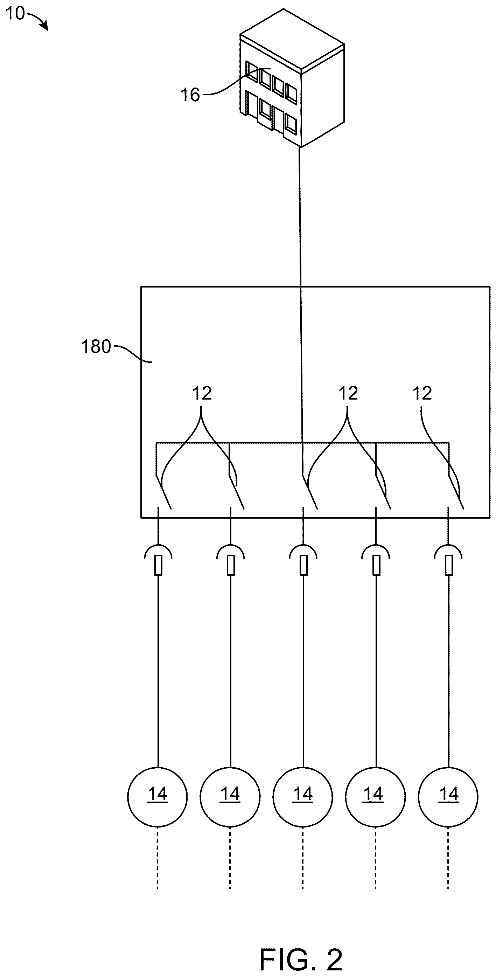

With reference to FIG. 2, the subsea electrical junction box 180 includes a plurality of hydraulically actuated electrical switch assemblies 12 to individually selectively electrically connect and disconnect the offshore wind turbines 14 from the power grid 16.

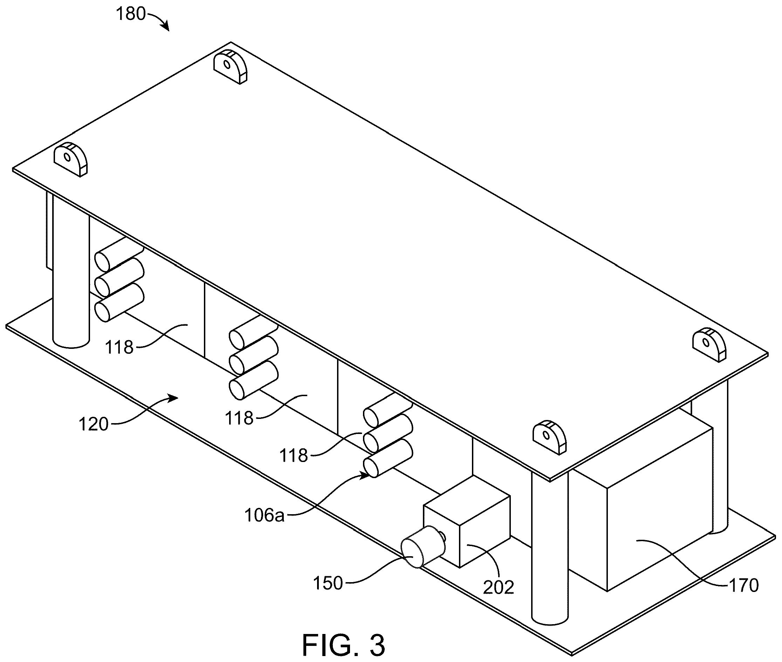

With reference to FIG. 3, the subsea electrical junction box 180 includes a plurality of isolator modules 118 connected together to form an isolator module assembly 120, which is connected to an accumulator package 170. The accumulator package 170 may be oriented in any direction. In some instances, the accumulator package 170 extends horizontally from the isolator module assembly 120, as depicted in the illustrated example of FIG. 3. Further, an intermediate pressure chamber 202 is connected to the accumulator package 170, as will be explained in greater detail below. When constructing the subsea electrical junction box 180, isolator modules 118 may be added or removed according to the number of offshore wind turbines 14 in the wind farm 10 (shown in FIG. 1). Thus, the subsea electrical junction box 180 is scalable.

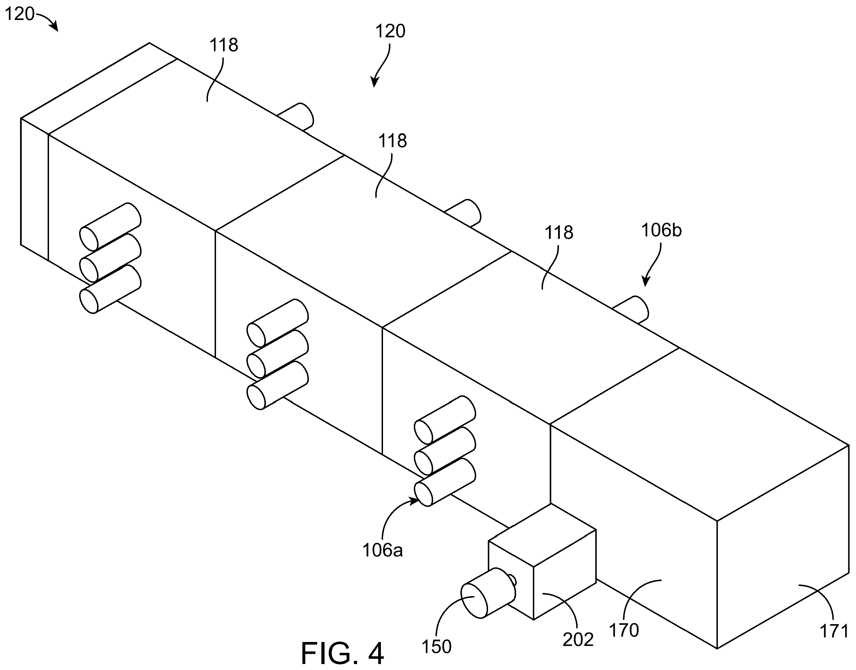

With reference to FIG. 4, each isolator module 118 has first and second three-phase wet-mate connectors 106a, b ready for attachment to one of the offshore wind turbines 14 or the power grid 16 (shown in FIG. 1). Additionally, an ROV 150 equipped to transport pressurized fluid can interface with the accumulator package 170 to relieve pressure or recharge the accumulator package 170. To recharge the accumulator package 170, fluid may be transferred via the intermediate pressure chamber 202, as will be explained in greater detail below.

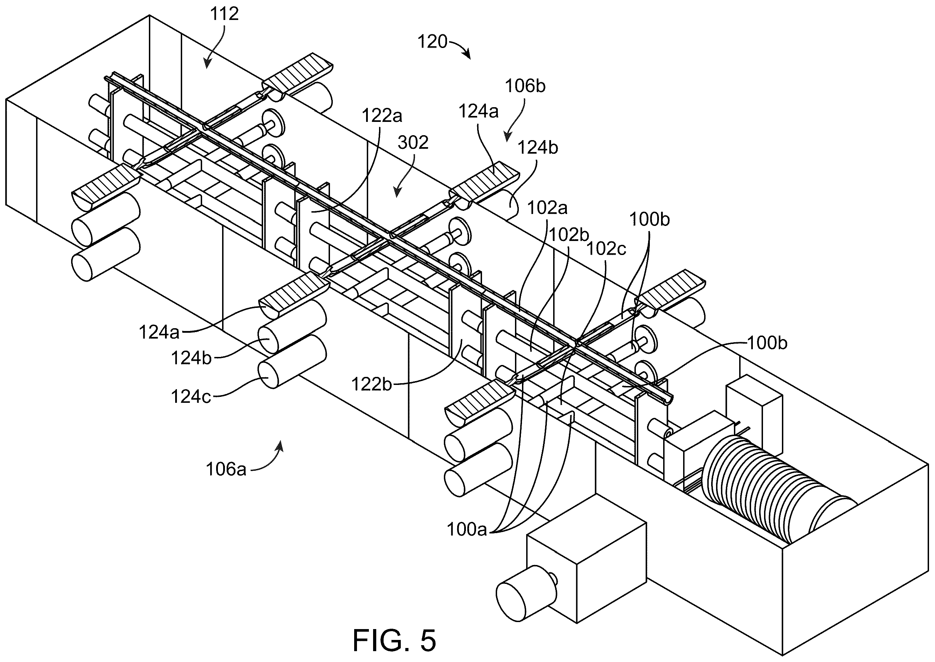

With reference to FIG. 5, the accumulator packages 170 and the isolator modules 118 are connected to one another and are hollow. Thus, the subsea electrical junction box 180 defines an internal chamber 112. The first and second wet-mate three phase connectors 106a, b are attached to a common busbar system 302. Each of the first and second wet-mate three phase connectors 106a, b include a first single phase connector 124a, a second single phase connector 124b, and third single phase connector 124c. Further, dielectric fluid pressure in the subsea electrical junction box 180 is equal to ambient subsea pressure due to a pressure connection between the two media through a flexible membrane and/or bellow (not shown) that may be formed of metal and/or rubber.

Further, each isolator module 118 houses a first busbar 102a, a second busbar 102b, and a third busbar 102c, which, in some instances, are substantially identical. When the isolator modules 118 are connected together, the first, second, and third busbars 102a-102c are respectively joined to form the busbar system 302. It should be understood that the first, second, and third busbars 102a, b, c are formed of an electrically conductive material. Further, each of the first, second, and third busbars 102a, b, c carries a distinct electrical phase of alternating current. A first switch 100a and a second switch 100b are connected to and extend sustainably orthogonally from each of the first, second, and third busbars 102a, b, c. In some instances, the first and second switches 100a, b are substantially identical. Although the first and second switches 100a, b are depicted as being used in the subsea electrical junction box 180 (shown in FIG. 3), it should be understood that the first and second switches 100a, b may be utilized in any suitable electrical power distribution and/or control application (e.g., a substation).

Consequently, the first, second, and third single phase connectors 124a, b, c of the first wet-mate three phase connector 106a are respectively in selective electrical communication with the first, second, and third busbars 102a, b, c via the first switches 100a.

Similarly, the first, second, and third single phase connectors 124a, b, c of the second wet-mate three phase connector 106b are respectively in selective electrical communication with the first, second, and third busbars 102a, b, c via the second switches 100b.

Each isolator module 118 further includes a first dielectric support structure 122a and a second dielectric support structure 122b s for the first, second, and third busbars 102a, b, c. Thus, the first, second, and third busbars 102a, b, c are electrically isolated from one another.

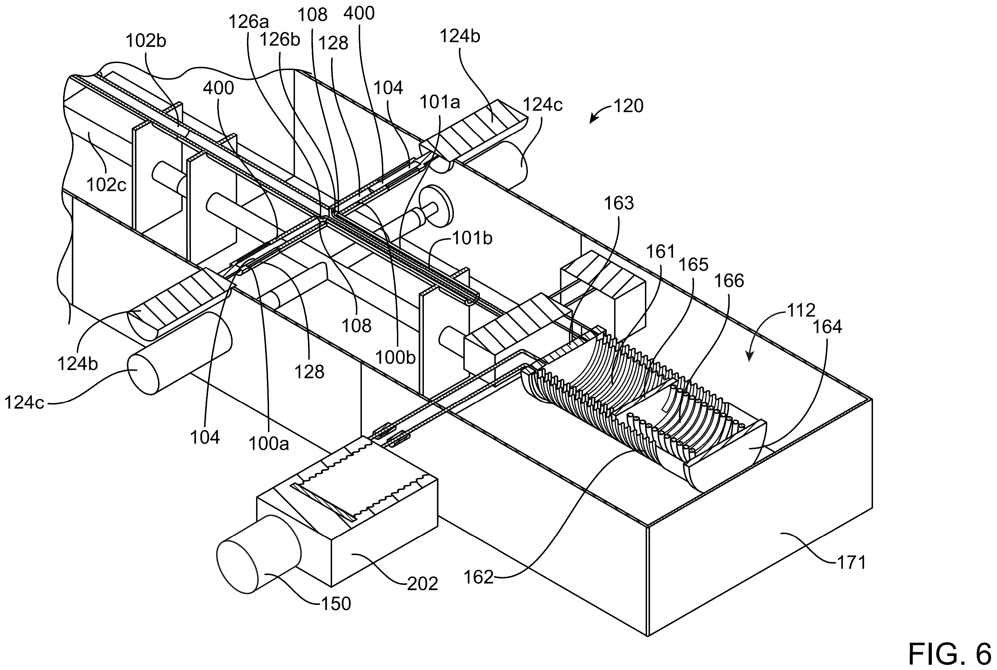

With reference to FIG. 6, inside the internal chamber 112, the accumulator package 170 includes a housing 171, an inner bellow 161, and an outer bellow 162. The inner bellow 161 and the outer bellow 162 are fixed to an accumulator package end plate 163. The outer bellow 162 has an outer bellow end plate 164. The inner bellow 161 has an inner bellow end plate 165. The inner bellow 161 is fixed to the accumulator package end plate 163. The internal chamber 112, the inner bellow 161, and the outer bellow 162 are filled with hydraulic fluid (e.g., oil). In some instances, a spring 166 is pre-tensioned to generate hydraulic pressure and store energy. The spring 166 is connected to and presses against the inner bellow end plate 165 and the outer bellow end plate 164. In operation, the accumulator package 170 manages hydraulic pressure within the subsea system. The inner bellow 161 and the outer bellow 162 are each in fluid communication with the intermediate pressure chamber 202.

The inner bellow 161 and the outer bellow 162 are flexible, accordion-pleated components that expand and contract to absorb and manage pressure changes within the subsea electrical junction box 180. The inner bellow 161 is nested within the outer bellow 162. Further, the outer bellow end plate 164 interfaces with the inner bellow 161 via the spring 166. The end plates 163, 164, 165 provide structural integrity and ensure that the inner and outer bellows 161, 162 remain properly aligned and functional.

In some instances, the spring 166 is pre-tensioned and is positioned between the inner bellow end plate 165 and the outer bellow end plate 164. This spring 166 exerts a force on the inner bellow 161 and the outer bellow 162. In some instances, the spring 166 compresses the inner bellow 161 and expands the outer bellow 162. Thus, the spring 166 aids in maintaining desired hydraulic pressure levels within the isolator module assembly 120. The pre-tensioning of the spring 166 ensures that the accumulator package 170 upholds a pressure difference between the inner bellow 161 and the outer bellow 162, and stores energy that can be used for switch actuation, as will be explained in greater detail below.

As shown in the illustrated example of FIG. 6, the second busbar 102b is hollow and houses first and second hydraulic supply lines 101a, b, which are dielectric and thus electrically isolate the first and second switches 100a, b from the accumulator package 170. The second busbar 102b defines first and second transvers bores 126a, b, through which the first and second hydraulic supply lines 101a, b extend. Each of the first and second switches 100a, b includes a hydraulic fitting 108 to connect to the first and second hydraulic supply lines 101a, b. Each of the first and second switches 100a, b further includes a piston 104 slidably sealably housed within a housing 128 via a piston seal 400. It should be understood that the second busbar 102b is configured to distribute electrical power to multiple single phase connectors that are on the same phase (e.g., single phase connectors 124b).

It should be understood that the first busbar 102a (shown in FIG. 5) and the third busbar 102c are substantially identical to the second busbar 102b. Thus, the first busbar 102a and the third busbar 102c each house dielectric first and second hydraulic supply lines (not shown) that electrically isolate their respective first and second switches 100a, b (shown in FIG. 5) from the accumulator package 170. The first busbar 102a and the third busbar 102c each define first and second transverse bores (not shown) through which their respective first and second hydraulic supply lines extend. The first busbar 102a is configured to distribute electrical power to multiple single phase connectors that are on the same phase (e.g., single phase connectors 124a, shown in FIG. 5). Similarly, the third busbar 102c is configured to distribute electrical power to multiple single phase connectors that are on the same phase (e.g., single phase connectors 124c).

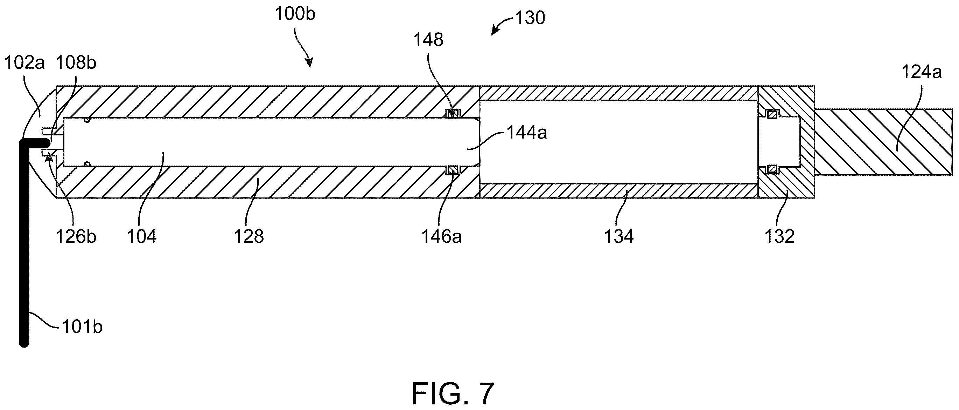

With reference to FIG. 7, the piston 104 is depicted in a retracted configuration 130 relative to the housing 128. Further, the second switch 100b has an electrical terminal 132 connected to the housing 128 via a dielectric bracket 134. The electrical terminal 132 is further connected to the first single phase connector 124a. Thus, when the piston 104 is in the retracted configuration 130, the electrical terminal 132 is electrically isolated from the piston 104, the housing 128, and the first busbar 102a. Further, in the retracted configuration 130, a first spring 146a mounted in the housing 128 releasably snaps into a groove 148 defined in a front end 144a of the piston 104.

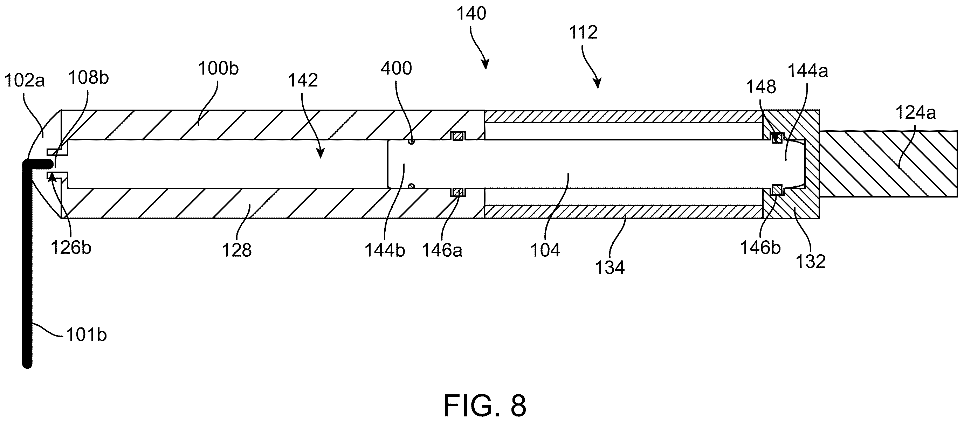

With reference to FIG. 8, the piston 104 is depicted in an extended configuration 140 relative to the housing 128. In operation, when fluid enters and fills an actuation space 142 defined by the housing 128, hydraulic pressure is applied to a rear end 144b of the piston 104. Consequently, the piston 104 slidably extends outwardly from the housing 128 into the internal chamber 112. As the piston 104 moves into the extended configuration 140, the piston 104 is received by and engages the electrical terminal 132. More specifically, a second a spring 146b mounted in the electrical terminal 132 releasably snaps into to the groove 148 defined in the front end 144a of the piston 104. Thus, when the piston 104 is in the extended configuration 140, the electrical terminal 132 is electrically connected to the piston 104, the housing 128, and the first busbar 102a. It should be appreciated that the first and second springs 146a, b ensure electric contact between and the housing 128 and piston 104 and the electrical terminal 132 and the piston 104, respectively. In some instances, the first and/or second springs 146a, b are formed as contact bands. Further, the piston seal 400 is connected to and moves with piston 104.

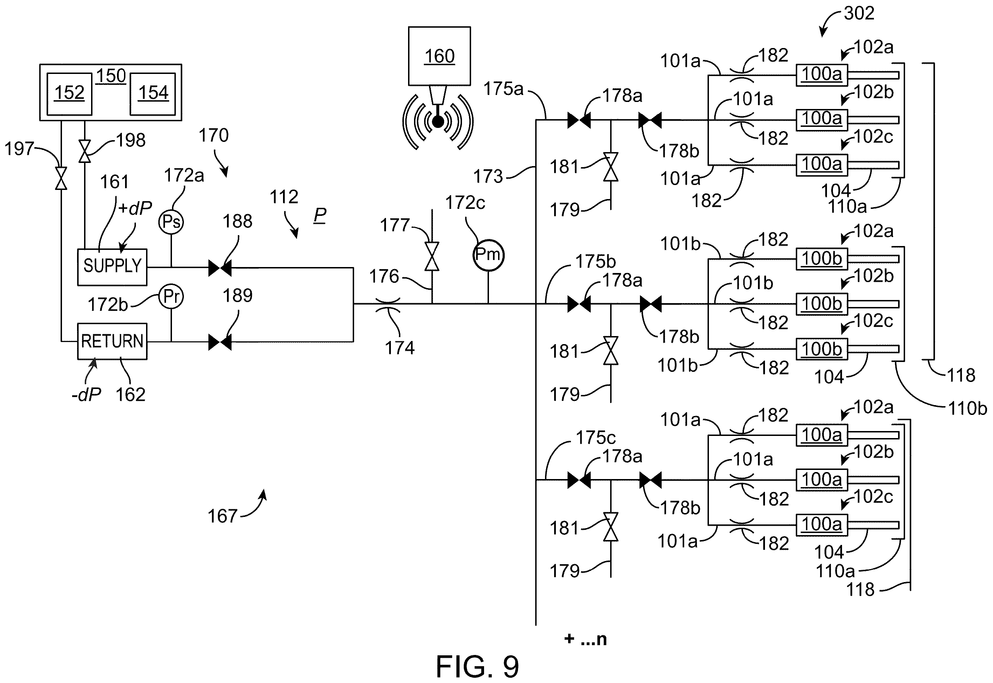

With reference to FIG. 9, in a first hydraulic flow arrangement 167 the accumulator package 170 may be placed in fluid communication with a plurality of isolator modules 118. In some instances, the accumulator package 170 is pre-charged to pressures higher and lower than a chamber pressure *P* in the internal chamber 112. In operation, selective release of hydraulic pressure to and from the accumulator package 170 actuates the first and second switches 100a, b of the busbar system 302, as will be explained in greater detail below. Further, by fluidly isolating the hydraulic lines 101a, b to hold the volume of hydraulic fluid in the hydraulic lines 101a, b static, the first and second switches 100a, b are hydraulically locked in position (e.g., extended, connected, retracted, an intermediate position, etc.).

More specifically, in some instances, the inner bellow 161 is pre-charged to an extending pressure *+dP* that is greater than the chamber pressure *P* in the internal chamber 112. Conversely, in some instances, the outer bellow 162 is pre-charged to a retracting pressure *-dP* that is less than the chamber pressure *P* in the internal chamber 112. The inner bellow 161 is in fluid communication with a high pressure valve 188. A supply pressure sensor 172a is fluidly placed between the inner bellow 161 and the high pressure valve 188 to measure a supply pressure *Ps*. The outer bellow 162 is in fluid communication with a low pressure valve 189. A return pressure sensor 172b is fluidly placed between the outer bellow 162 and the low pressure valve 189 to measure a return pressure *Pr.*

Further, the high pressure valve 188 and the low pressure valve 189 are in fluid communication with a manifold 173 via a manifold nozzle 174. A manifold pressure sensor 172c is fluidly placed between the manifold nozzle 174 and the manifold to measure a manifold pressure *Pm.* Each switch module 118 has first and second switch groups 110a,b. First switches 100a of the first, second, and third busbars 102a, b, c are fluidly in parallel with one another to form the first switch group 110a. Second switches 100b of the first, second, and third busbars 102a, b, c are fluidly in parallel with one another to form the second switch group 110b.

A plurality of branches 175a, b, c respectively fluidly connect each of the first and second switch groups 110a, b to the manifold 173 and thus the manifold nozzle 174. It should be understood that although three branches 175a, b, c are depicted in FIG. 9, the manifold 173 may have any number of branches 175 corresponding to the combined number of first and second switch groups 110a, b. Additionally, a manifold drain line 176 is placed fluidly between manifold nozzle 174 and the manifold 173. Flow through the manifold drain line 176 is controlled by a manifold drain valve 177.

Each of the branches 175a, b, c has first and second control valves 178a, b fluidly between the manifold 173 and the isolator modules 118. A branch drain line 179 is placed fluidly between each of the first and second control valves 178a, b. Flow through the branch drain line 179 is controlled by a branch drain valve 181. Additionally, a switch nozzle 182 is fluidly placed between each of the first and second switches 100a, b and the second control valves 178b.

In operation, when the high pressure valve 188 is open and the low pressure valve 189 is closed, pressurized fluid at the extending pressure *+dP* flows from the inner bellow 161 into the first control valves 178a. Further, when the first and second control valves 178a, b are selectively opened, the pressurized fluid flows into the first switches 100a and/or the second switches 100b. Thus, with the extending pressure *+dP* behind the pistons 104 and the internal chamber 112 at chamber pressure P, the first switches 100a actuate into the extended configuration 140 (shown in FIG. 8) to electrically connect the first wet-mate three phase connector 106a (shown in FIG. 5) with the busbar system 302. Similarly, with the extending pressure *+dP* behind the pistons 104 and the internal chamber 112 at chamber pressure *P*, the second switches 100b actuate to electrically connect the second wet-mate three phase connector 106b (shown in FIG. 5) with the busbar system 302.

Further in operation, when the high pressure valve 188 is closed, the low pressure valve 189 is opened, and the first and second control valves 178a, b are opened, hydraulic fluid from the first and second switches 100a, b is released into the outer bellow 162, thus reducing the hydraulic fluid in pressure. As fluid pressure behind the pistons 104 of the first and/or second switches 100a, b decreases toward the retracting pressure *-dP* and below the chamber pressure P, hydraulic fluid within the internal chamber 112 at the chamber pressure P bears against and pushes the pistons 104 of the first and second switches 100a, b into the retracted configuration 130 (shown in FIG. 7). Thus, with the retracting pressure *-dP* behind the pistons 104 and the internal chamber 112 at chamber pressure *P*, the first switches 100a actuate to electrically disconnect the first and second wet-mate three phase connectors 106a, b with the busbar system 302.

Additionally, a ROV 150 equipped with bellows 152 or alternative mechanisms, such as a pump 154, for transporting pressurized fluid can interface with the accumulator package 170 to relieve pressure or recharge the accumulator package 170. To recharge the accumulator package 170, fluid may be transferred from the outer bellows 162 to the inner bellows 161 via a first pressure valve 197, and a second pressure valve 198. Thus, the spring 166 (shown in FIG. 6) positioned between the outer bellows 162 and the inner bellows 161 may be reloaded. In some instances, the first pressure valve 197 and the second pressure valve 198 are check valves. Specifically, the first pressure valve 197 is configured to relieve pressure from the outer bellow 162. Conversely, the second pressure valve 198 is configured to supply pressure to the inner bellow 161.

In some instances, the high pressure valve 188, the low pressure valve 189, the first and second control valves 178a, b, the manifold drain valve 177, the branch drain valves 181, the first pressure valve 197, and/or the second pressure valve 198 include electronic solenoid valves. Further the high pressure valve 188, the low pressure valve 189, the first and second control valves 178a, b, the manifold drain valve 177, the branch drain valves 181, the first pressure valve 197, and/or the second pressure valve 198 may be controlled, in some instances wirelessly, by an external controller 160.

Further, detected pressure drops between the supply pressure sensor 172a and the manifold pressure sensor 172c signify hydraulic flow through the manifold nozzle 174, allowing for an estimation of the flow rate. Conversely, the absence of a pressure drop indicates that there is no hydraulic flow through the manifold nozzle 174. These pressure drop measurements enable diagnostics of the movement of the pistons 104 and provide a positive confirmation of a successful actuation of the first and second switches 100a, b and thus connection of the electrical phases controlled by the first and second switches 100a, b.

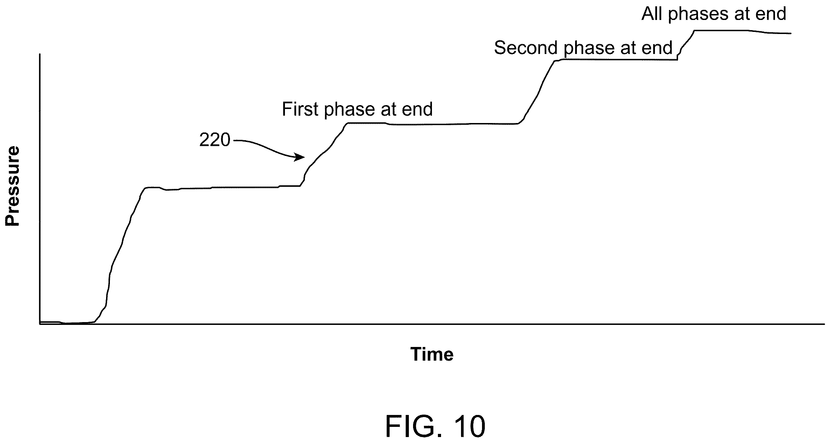

With reference to FIG. 10, by measuring pressure drops across the manifold nozzle 174 , a pressure versus time profile 220 may be charted that indicates actuation for the three different phases in the first switch 100a or the second switch 100b (shown in FIG. 9). More specifically, fluid pressure increases until one of the pistons 104 starts moving, then stabilizes before rising again as subsequent pistons 104 actuate.

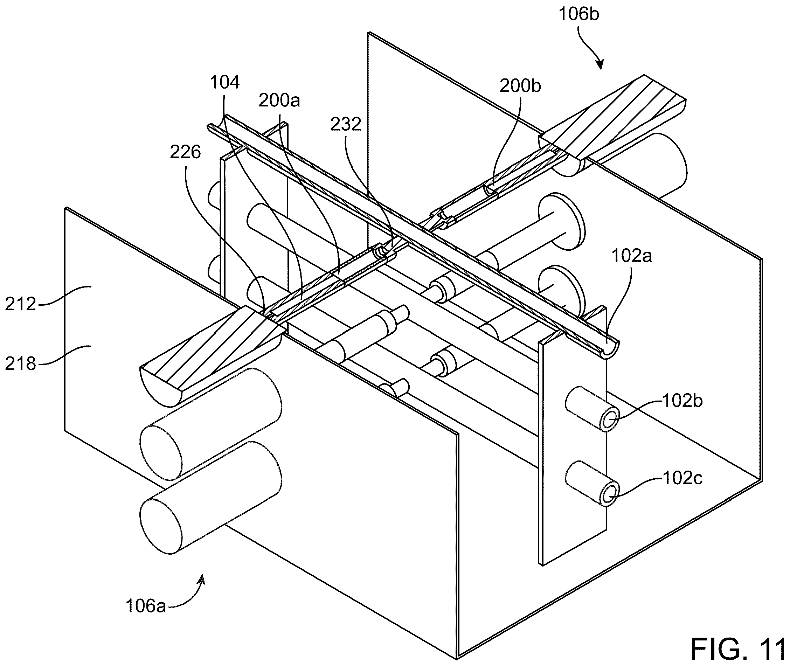

FIG. 11 illustrates an isolator module 218, according to an additional embodiment. First and second switches 200a, b may be mounted to a connector plate 212 of the isolator module 218 opposite the first wet-mate three phase connector 106a. More specifically, the first and second switches 200a, b each include the piston 104 slidably engaged in a housing 226, which is supported by the connector plate 212. Further, the first and second switches 200a, b each include an electrical terminal 232 mounted to the first, second, and third busbars 102a, b, c. The housing 226 receives pressurized fluid to actuate the piston 104 from an alternative location (not shown), in some instances, through a dielectric tube (not shown).

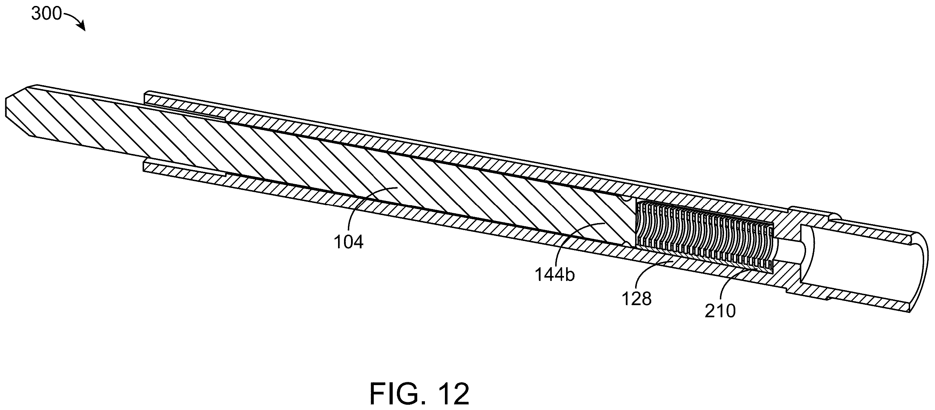

With reference to FIG. 12, an actuator assembly 300 according to an additional embodiment includes a bellow 210 disposed in the housing 128 behind the piston 104. When pressurized with hydraulic fluid, bellow 210 expands to engage the rear end 144b of the piston 104, thus pushing and extending the piston 104 out of the housing 128.

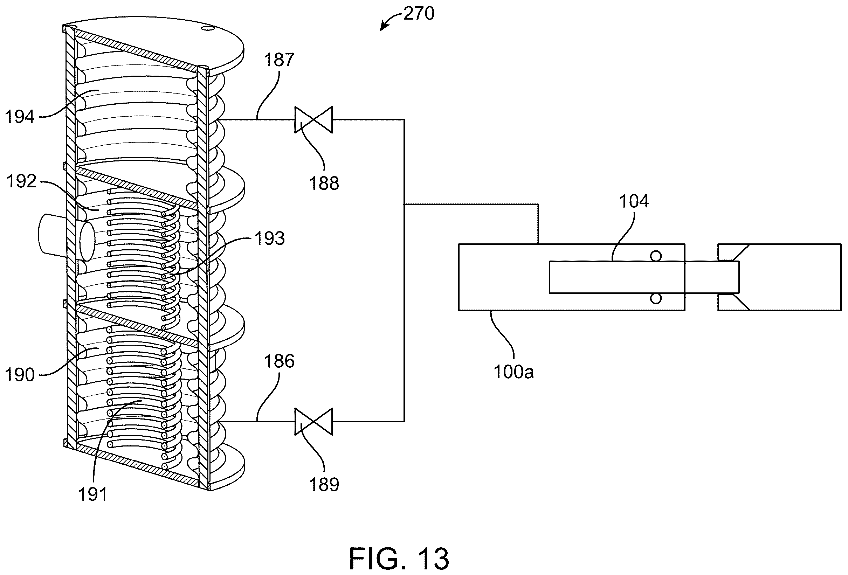

With reference to FIG. 13, an accumulator package 270 according to an additional embodiment includes a lower compartment 190 housing a high-tension spring 191, a middle compartment 192 housing a lower-tension spring 193, and an upper compartment 194. Consequently, the lower compartment 190 has a lower internal pressure (e.g., 90 bar) than the middle compartment 192, which in turn has a lower internal pressure (e.g., 100 bar) than the upper compartment 194 (e.g., 110 bar). The upper compartment 194 is in fluid communication with a high pressure valve 188. The lower compartment 190 is in fluid communication with a low pressure valve 189. The high pressure valve 188 and the lower pressure valve 189 are in fluid communication with the first switch 100a. When the high pressure valve 188 is open and the low pressure valve 189 is closed, the piston 104 extends. When the high pressure valve 188 is closed and the low pressure valve 189 is open, the piston 104 retracts.

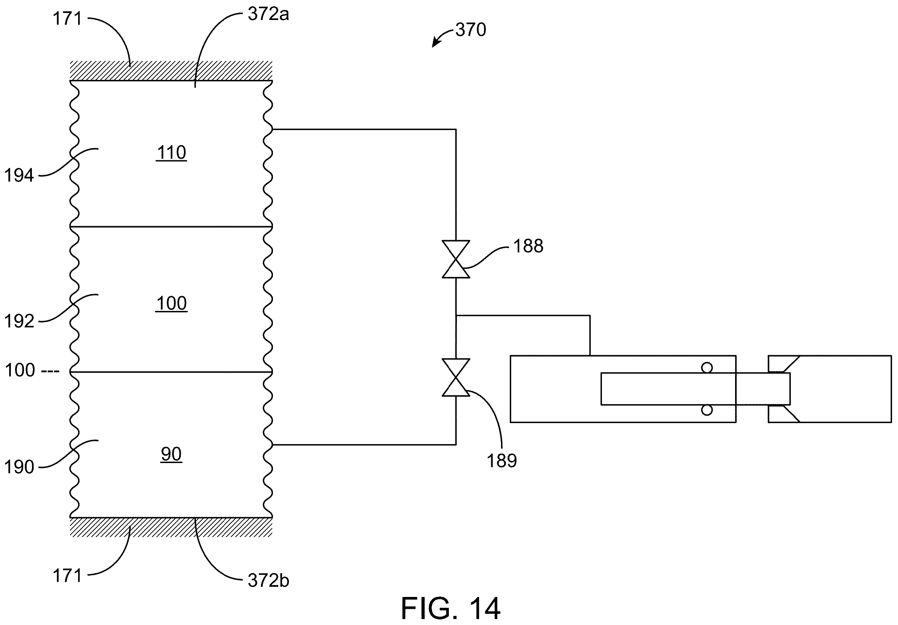

With reference to FIG. 14, an accumulator package 370 according to an additional embodiment includes the lower compartment 190, the middle compartment 192, and the upper compartment 194 preloaded with pressurized hydraulic fluid. Thus, the lower compartment 190 has a lower internal pressure (e.g., 90 bar) than the middle compartment 192, which in turn has a lower internal pressure (e.g., 100 bar) than the upper compartment 194 (e.g., 110 bar). The accumulator 370 is secured to the accumulator housing 171 at both the top and bottom ends 372a, b. The high pressure valve 188 and the lower pressure valve 189 are in fluid communication with the first switch 100a. When the high pressure valve 188 is open and the low pressure valve 189 is closed, the piston 104 extends. When the high pressure valve 188 is closed and the low pressure valve 189 is open, the piston 104 retracts.

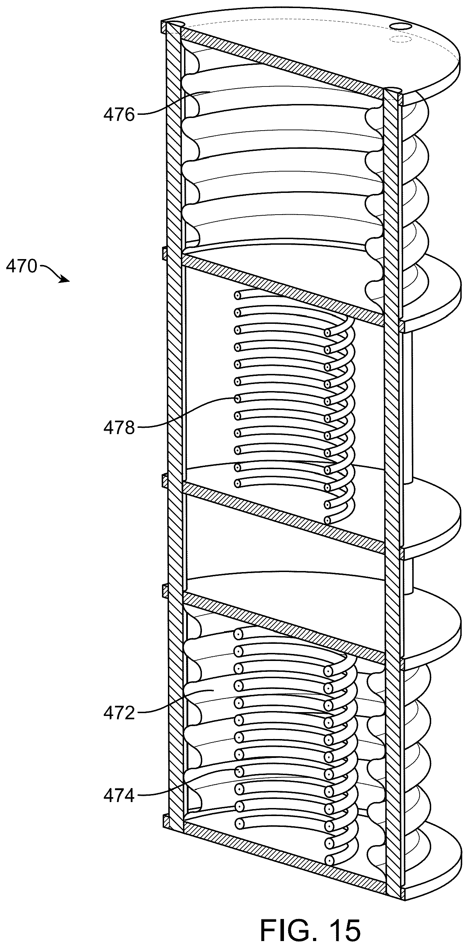

With reference to FIG. 15, an accumulator package 470 according to an additional embodiment includes a first pressure chamber 472 expanded by an internal spring 474 and a second pressure chamber 476 compressed by an external spring 478. Thus, the internal pressure in the first pressure chamber 472 is less than the internal pressure in the second pressure chamber 476.

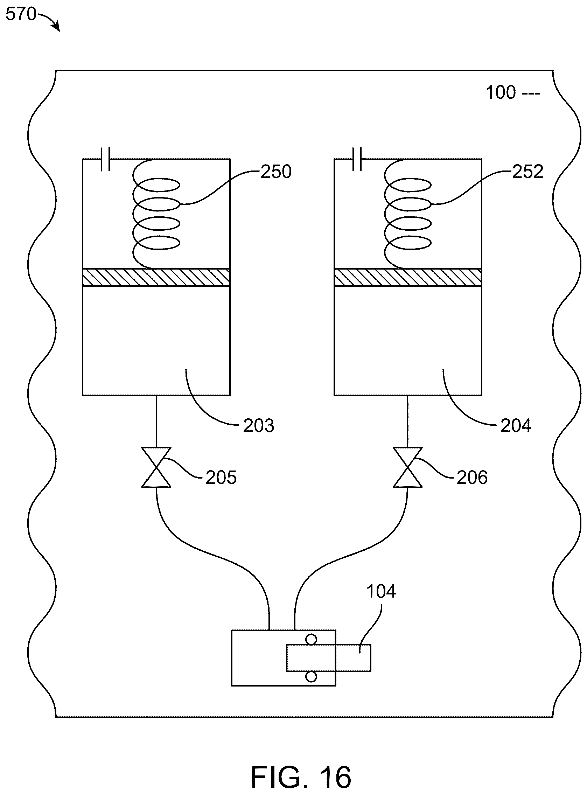

With reference to FIG. 16, an accumulator package 570 according to an additional embodiment includes a first chamber 203 and a second chamber 204. The first chamber 203 is compressed by a pressure spring 250 that counteracts pressure depletion within the first chamber 203. The second chamber 204 is expanded by a tension spring 252 that counteracts pressure build-up within the second chamber 204. Thus the internal pressure of the first chamber 203 is greater than ambient pressure. Conversely, the internal pressure of the second chamber 204 is less than ambient pressure.

The first chamber is fluidly connected to the piston 104 via a high pressure valve 205. The second chamber 204 is fluidly connected to the piston 104 via a low pressure valve 206. When the high pressure valve 205 is open and the low pressure valve 206 is closed, the piston 104 extends. When the high pressure valve 205 is closed and the low pressure valve 206 is open, the piston 104 retracts.

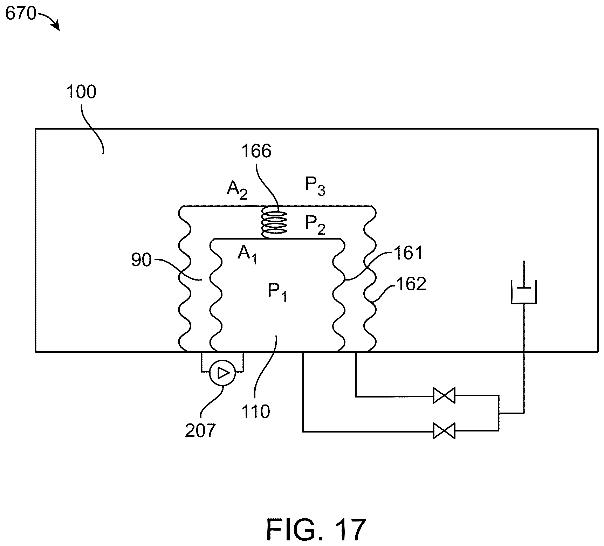

With reference to FIG. 17, an accumulator package 670 according to an additional embodiment includes the inner bellow 161 within the outer bellow 162. The spring 166 compresses the inner bellow 161 and expands the outer bellow 162. The inner bellow 161 has a first internal pressure *P1* greater than ambient pressure *P3*. The outer bellow 162 has a second internal pressure *P2* less than ambient pressure *P3*. Further, a pump 207 is configured to transfer pressure from the outer bellow 162 to the inner bellow 161.

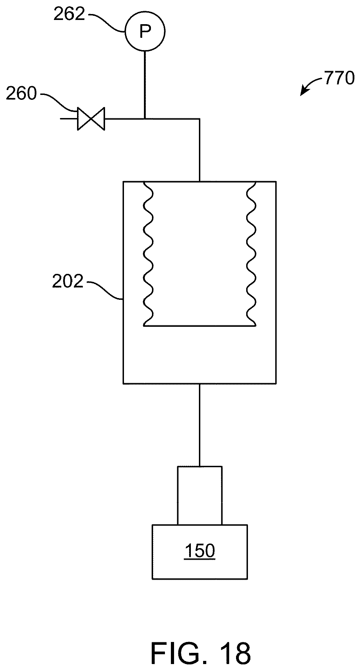

With reference to FIG. 18, an accumulator package 770 according to an additional embodiment includes the intermediate pressure chamber 202 in fluid communication with a valve 260. A pressure sensor 262 measures pressure between the intermediate pressure chamber 202 and the valve 260. The intermediate pressure chamber 202 is configured to be pre-charged by the ROV 150.

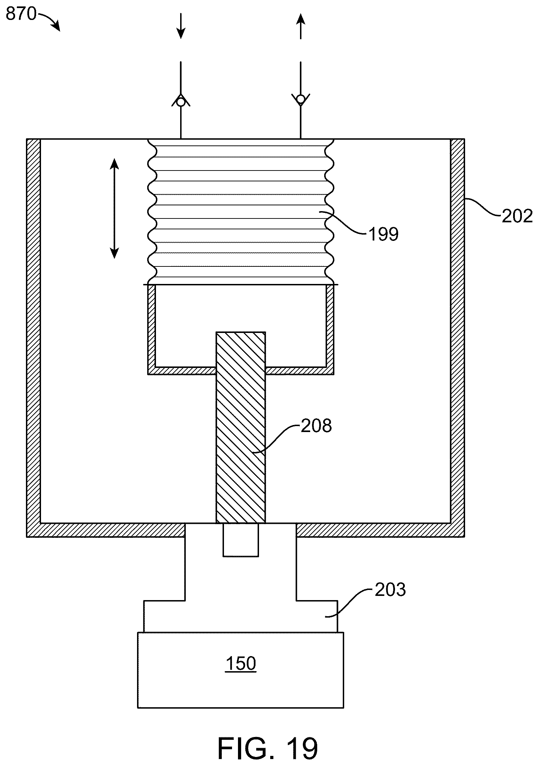

With reference to FIG. 19, an accumulator package 870 according to an additional embodiment includes the intermediate pressure chamber 202 and a torque screw 208 configured to retract and expanding the inner pressure accumulator 199. The ROV 150 may turn the torque screw 208 via the connection point 203.

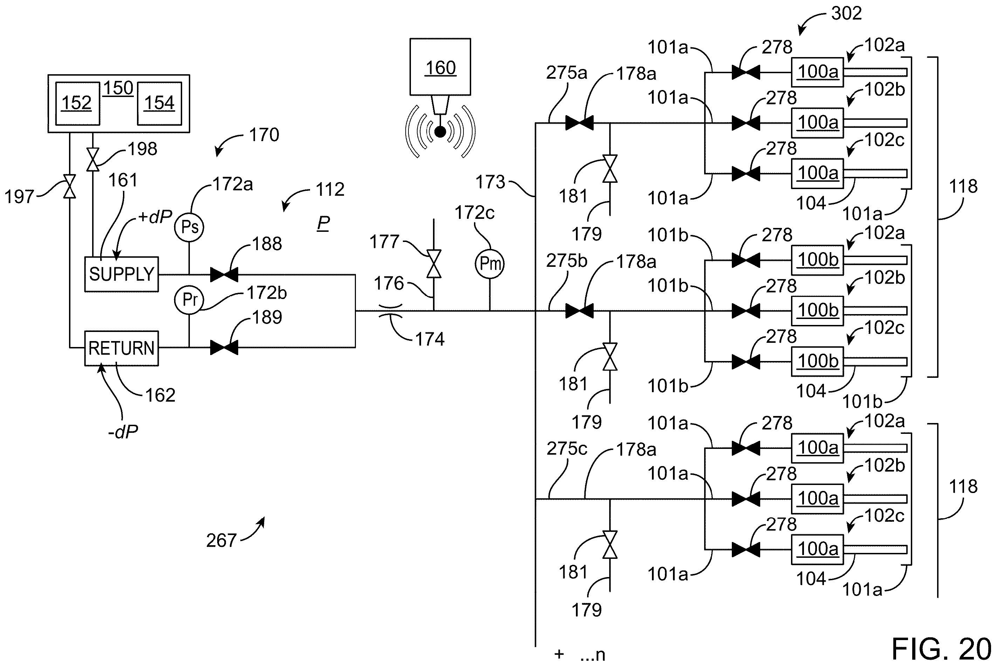

With reference to FIG. 20, in a second hydraulic flow arrangement 267, the accumulator package 170 may be placed in fluid communication with the plurality of isolator modules 118. In some instances, the accumulator package 170 is pre-charged to pressures higher and lower than a chamber pressure P in the internal chamber 112. In operation, selective release of hydraulic pressure to and from the accumulator package 170 actuates the switches 100a, b of the busbar system 302, as will be explained in greater detail below. Further, by fluidly isolating the hydraulic lines 101a, b to hold the volume of hydraulic fluid in the hydraulic lines 101a, b static, the switches 100a, b are hydraulically locked in position (e.g., extended, connected, retracted, an intermediate position, etc.).

More specifically, in some instances, the inner bellow 161 is pre-charged to the extending pressure *+dP* and the outer bellow 162 is pre-charged to the retracting pressure *-dP.* The inner bellow 161 is in fluid communication with the high pressure valve 188. The supply pressure sensor 172a is fluidly placed between the inner bellow 161 and the high pressure valve 188 to measure the supply pressure *Ps.* The outer bellow 162 is in fluid communication with the low pressure valve 189. The return pressure sensor 172b is fluidly placed between the outer bellow 162 and the low pressure valve 189 to measure the return pressure *Pr.*

Further, the high pressure valve 188 and the low pressure valve 189 are in fluid communication with the manifold 173 via the manifold nozzle 174. The manifold pressure sensor 172c is fluidly placed between the manifold nozzle 174 and the manifold to measure the manifold pressure *Pm.* Each switch module 118 has the first and second switch groups 110a,b. First switches 100a of the first, second, and third busbars 102a, b, c are fluidly in parallel with one another to form the first switch group 110a. Second switches 100b of the first, second, and third busbars 102a, b, c are fluidly in parallel with one another to form the second switch group 110b.

A plurality of branches 275a, b, c respectively fluidly connect each of the first and second switch groups 110a, b to the manifold 173 and thus the manifold nozzle 174. It should be understood that although three branches 275a, b, c are depicted in FIG. 20, the manifold 173 may have any number of branches 275 corresponding to the combined number of first and second switch groups 110a, b. Additionally, a manifold drain line 176 is placed fluidly between manifold nozzle 174 and the manifold 173. Flow through the manifold drain line 176 is controlled by a manifold drain valve 177.

Each of the branches 275a, b, c has the first control valve 178a fluidly between the manifold 173 and the isolator modules 118. The branch drain line 179 is placed fluidly between the first control valve 178a and each of the first and second switch groups 110a, b. Flow through the branch drain line 179 is controlled by a branch drain valve 181. Additionally, a second control valve 278 is fluidly placed along each of the first and second hydraulic supply lines 101a, b between each of the first and second switches 100a, b and the second control valve 178b. In some instances, the second control valves 278 are electronic solenoid valves.

In operation, when the high pressure valve 188 is open and the low pressure valve 189 is closed, pressurized fluid at the extending pressure *+dP* flows from the inner bellow 161 into the first control valves 178a. Further, when the first control valve 178a and the second control valve 278 are selectively opened, the pressurized fluid flows into the first switches 100a and/or the second switches 100b. Thus, with the extending pressure *+dP* behind the pistons 104 and the internal chamber 112 at chamber pressure *P*, the first switches 100a actuate into the extended configuration 140 (shown in FIG. 8) to electrically connect the first wet-mate three phase connector 106a (shown in FIG. 5) with the busbar system 302. Similarly, with the extending pressure *+dP* behind the pistons 104 and the internal chamber 112 at chamber pressure *P,* the second switches 100b actuate to electrically connect the second wet-mate three phase connector 106b (shown in FIG. 5) with the busbar system 302.

Further in operation, when the high pressure valve 188 is closed, the low pressure valve 189 is opened, and the first control valve 178a and the second control valve 278 are opened, hydraulic fluid is released from the first and second switches 100a, b into the outer bellow 162, thus reducing the hydraulic fluid in pressure. As fluid pressure behind the pistons 104 of the first and/or second switches 100a, b decreases toward the retracting pressure *-dP* and below the chamber pressure *P*, hydraulic fluid within the internal chamber 112 at the chamber pressure *P* bears against and pushes the pistons 104 of the first and second switches 100a, b into the retracted configuration 130 (shown in FIG. 7). Thus, with the retracting pressure *-dP* behind the pistons 104 and the internal chamber 112 at chamber pressure *P*, the first and second switches 100a, b actuate to electrically disconnect the first and second wet-mate three phase connectors 106a, b with the busbar system 302.

Additionally, the ROV 150 can interface with the accumulator package 170 to relieve pressure or recharge the accumulator package 170 as described above.

Further the high pressure valve 188, the low pressure valve 189, the first control valve 178a, the second control valve 278, the manifold drain valve 177, the branch drain valves 181, the first pressure valve 197, and/or the second pressure valve 198 may be controlled, in some instances wirelessly, by the external controller 160.

Further, detected pressure drops between the supply pressure sensor 172a and the manifold pressure sensor 172c signify hydraulic flow through the manifold nozzle 174, allowing for an estimation of the flow rate. Conversely, the absence of a pressure drop indicates that there is no hydraulic flow through the manifold nozzle 174. These pressure drop measurements enable diagnostics of the movement of the pistons 104 and provide a positive confirmation of a successful actuation of the first and second switches 100a, b and thus connection of the electrical phases controlled by the first and second switches 100a, b.

While the subject disclosure is described through the above embodiments, it will be understood by those of ordinary skill in the art that modification to and variation of the illustrated embodiments may be made without departing from the inventive concepts herein disclosed. Moreover, while some embodiments are described in connection with various illustrative structures, one skilled in the art will recognize that the system may be embodied using a variety of specific structures.

## Claims

1. A subsea electrical junction box (180), comprising:
a pressurized fluid source;
a busbar (102a, b);
a switch (100a, b), the switch being
in selective fluid communication with the pressurized fluid source, the pressurized fluid source supplying hydraulic fluid to actuate the switch from a retracted configuration (130) to an extended configuration (140), and
electrically isolated from the pressurized fluid source; and
an electrical connector (124a, b, c) in selective electrical communication with the busbar via the switch.

2. The subsea electrical junction box of claim 1, wherein the busbar is hollow and houses at least a portion of a hydraulic line (101a, b) fluidly connecting the switch to the pressurized fluid source.

3. The subsea electrical junction box of claim 2, wherein the hydraulic line is electrically insulative.

4. The subsea electrical junction box of any of claims 2-3, wherein
the busbar defines a transverse bore (126a, b), and
the hydraulic line extends through the transverse bore to connect to the switch.

5. The subsea electrical junction box of any of claims 1-4, wherein the pressurized fluid source is an accumulator package (170).

6. The subsea electrical junction box of any of claims 1-5, wherein the switch includes
a housing (128) mounted to and in electrical communication with the busbar, and
a piston (104) slidably disposed in and in electrical communication with the housing.

7. The subsea electrical junction box of claim 6, wherein
the piston is slidably disposed in an actuation space (142) defined by the housing, and
when the pressurized fluid source supplies the hydraulic fluid to the switch, the hydraulic fluid flows into the actuation space and fluidically bears against a rear end (144a) of the piston to push the piston outwardly from the housing.

8. The subsea electrical junction box of any of claims 6-7, wherein the switch includes
an electrical terminal (132) mounted to and in electrical communication with the electrical connector, and
a dielectric bracket (134) mounted to the housing and the electrical terminal, the dielectric bracket electrically insulating the electrical terminal from the housing when the piston is in the retracted configuration.

9. The subsea electrical junction box of claim 8, wherein when the piston is in the extended configuration, the piston extends through the dielectric bracket.

10. The subsea electrical junction box of any of claims 8-9, wherein when the piston is in the extended configuration,
the piston extends into, contacts, and is in electrical communication with the electrical terminal, and
the electrical connector is in electrical communication with the busbar via the electrical terminal, the piston, and the housing.

11. The subsea electrical junction box of any of claims 8-10, wherein when the piston is in the extended configuration, a spring (146) mounted in the electrical terminal releasably snaps into to a groove (148) defined in a front end (144a) of the piston.

12. The subsea electrical junction box of any of claims 8-10, wherein when the piston is in the extended configuration, a spring (146) mounted in the housing snaps into to a groove (148) defined in a rear end (144b) of the piston.

13. The subsea electrical junction box of any of claims 6-12, wherein the piston sealably engages the housing via a piston seal (400) disposed about the piston.

14. The subsea electrical junction box of any of claims 6-13, wherein the switch includes a bellow (210) disposed in the housing to engage a rear end (144b) of the piston, the bellow being in fluid communication with the accumulator package.

15. The subsea electrical junction box of any of claims 1-14, wherein the pressurized fluid source receives the hydraulic fluid to actuate the switch from the extended configuration to the retracted configuration.
